# EUROPEAN PATENT SPECIFICATION

(11) **EP 1 574 430 B1**
(45) Date of publication and mention of the grant of the patent: **03.10.2007**
(21) Application number: 05251360.3
(22) Date of filing: 08.03.2005
(51) Int. Cl.: B64F 1/22

(54) **Method and system for over-steer avoidance**
Vorrichtung und Verfahren zur Vermeidung einer Maximallenkwinkelüberschreitung
Dispositif et procédé pour éviter de dépasser une valeur limite d'un angle de braquage

(30) Priority: 08.03.2004 US 795539
(43) Date of publication of application: 14.09.2005
(73) Proprietor: FMC Technologies, Inc., Chicago, IL 60601 (US)
(72) Inventor: Rodenkirch, Mark James, Orlando, Florida 32837 (US); Heemskerk, Nicolaas Adrianus, Orlando, Florida 32835 (US)
(74) Representative: Stainthorpe, Vanessa Juliet

(56) References cited:
- DE-A1- 19 808 836
- US-A- 4 745 410
- US-A- 5 516 252
- US-A- 5 680 125
- US-B1- 6 446 998

## Description

### Field of the Invention

The present invention relates generally to an aircraft tractor and, more particularly to a turn-out sensor for such a tractor.

### Background of the Invention

It is often desirable to tow or push an aircraft at an airport rather than use the aircraft's engines for propulsion. For example, during an aircraft tow or pushback operation, a tractor attaches to the aircraft's landing gear and provides the propulsion power to move the aircraft. There are two general types of aircraft towing in practice - towbar and towbarless tractors. With towbar-type towing, a long slender bar is used between the tractor and the nose landing gear of the aircraft. With towbarless-type towing a towbar is not needed; instead, the nose gear is picked up by the tractor during operation.

An important factor when towing or pushing an aircraft using either type of towing method involves the "aircraft steering angle". The aircraft steering angle is the angle between the wheel of the nose landing gear and the longitudinal axis of the aircraft. Regardless of the direction of the deviation, the steering angle is usually referred to in an absolute sense (e.g., 70°) rather than as signed values (e.g., -55°). Because it is possible, with either type of tractor, to steer the nose landing gear beyond its mechanical limits (known as "over-steer"), an indicator of such a condition would be useful. If a maximum aircraft steering angle is being exceeded, then damage to the aircraft and tractor is possible.

Past attempts at alerting tractor operators to over-steer conditions have focused on detecting when a maximum steering angle has be reached. At such a point, damage may already be occurring to either the tractor or the aircraft or it may be too late for the operator to react and correct the situation. Still other attempts at addressing this problem have included an over-torque sensor on the tractor that mechanically detects that the maximum over-steer condition has been met. Typically, the over-torque sensor can control the drive motor of the tractor so as to disengage it if needed or trip an alarm that alerts an operator. Other attempts have included, for example, measuring multiple distances from the tractor and the two sides of the aircraft in order to calculate the steering angle. Similar attempts have included parallel beams emitted from the tractor and a pair of detectors for determining when one of the beams is interrupted by an aircraft because of over-steering. Other attempts have required special markings, or targets, be affixed to the side of the aircraft along with the use of a collimated light source such as a laser. Such a system requires modifying an aircraft and relies on a particularly narrow angle of incidence with the target to ensure proper reflection.
US-A-5,680,125 (Elfstrom et al) discloses a method of determining the acceptability of the steering angle between the nose wheel of an aircraft and the longitudinal axis of the aircraft. A source of collimated radiation, for example a laser, directs a beam onto a surface of the aircraft having at least two significantly different reflecting areas (e.g. a light material arc bounded by dark material marks). Reflection of the collimated beam, or lack thereof, is detected and used to determines whether the steering angle is within an acceptable range.
US-A-4,745,410 (Schuller et al) discloses a towing vehicle monitoring device for calculating the turn-out angle between the longitudinal axes of the towing vehicle and the aircraft by measuring the relative distance between two opposing transmitters/receivers for sound or other pulse signals and the fuselage of the aircraft. An algorithm is required to calculate the turn-out angle based on the difference between the two measured distances and the known curvature of the specific aircraft type nose.

Whatever the merits of these prior techniques, there remains an unmet need for a simple, efficient and reliable system and method to provide advanced warning of over-steering during aircraft towing and pushing operations.

### BRIEF SUMMARY OF THE INVENTION

The invention is defined in the appended claims. Accordingly, embodiments of the present invention provide an early warning to a tractor operator engaged in towing or pushing an aircraft. In one embodiment, two detectors are used to create a detection area in which the aircraft should be present when the steering angle is well within a safe range. When one of the detectors fails to detect the presence of the aircraft, then the operator is alerted, before over steering can occur, in order that corrective action can be undertaken. In particular, these detectors minimize false positives, are simple to operate, and perform reliably in a wide range of weather conditions and lighting environments. Furthermore, these embodiments do not require performing complex algorithms, using collimated energy sources, nor modifying the fuselage of an aircraft. In other embodiments, only one detector is used.

One aspect of the present invention relates to an over-steer avoidance system for an aircraft tractor that utilizes two uncollimated energy transmitters and receivers, such as ultrasonic detectors. The ultrasonic detectors are positioned on the tractor such that when the tractor is engaged with the aircraft, one ultrasonic detector is located on each side of the aircraft's fuselage. Each ultrasonic sensor includes a coverage area in which a target within that area will result in a reflection signal being returned to the sensor. The sensors are positioned such that both sensors will detect the presence of the aircraft within their respective coverage areas when the aircraft steering angle is within a safe range. However, when a predetermined steering angle is exceeded, one of the sensors will not receive a reflected signal and, therefore, will activate an alarm. This predetermined angle can be less than the maximum possible over-steer angle, so that the operator is warned of the potential condition early enough to easily take corrective action. In response to the warning alarm, the operator can reduce the steering angle so as to avoid over-steer or, alternatively, more closely monitor the towing activity with the awareness that over-steering may occur. Other embodiments of the present invention contemplate utilizing a single sensor that is able to detect the presence of a region near the nose of the aircraft when the steering angle is within a permitted range but detects its absence when the over steering angle exceeds a threshold angle.

Additional advantages of the present invention will become readily apparent to those skilled in this art from the following detailed description, wherein only the preferred embodiment of the invention is shown and described, simply by way of illustration of the best mode contemplated of carrying out the invention. As will be malized, the invention is capable of other and different embodiments, and its several details are capable of modifications in various obvious respects, all without departing from the scope of the claims. Accordingly, the drawings and description are to be regarded as illustrative in nature, and not as restrictive.

### BRIEF DESCRIPTION OF THE DRAWINGS

Fig. 1 illustrates a front view of a tow tractor and aircraft showing the cone-shaped sensing area of a pair of ultrasonic sensors.

Fig. 2 illustrates a perspective view of an arrangement as in Fig. 1.

Fig. 3 illustrates a perspective view of a tow tractor and aircraft when the steering angle has caused the aircraft to leave the sensing area of one of the ultrasonic sensors.

Fig. 4 illustrates a schematic view of pertinent circuitry within a tow tractor that includes an early warning over steering system in accordance with embodiments of the present invention.

Fig. 5 illustrates a flowchart of an exemplary method of warning of over steering condition in accordance with an embodiment of the present invention.

FIG. 6 illustrates an alternative embodiment in which a single sensor is used to provide warning of an over steering condition.

### DESCRIPTION OF THE INVENTION

The operation and selection of ultrasonic sensors are well understood by a skilled artisan in this field. However, as a brief background, such a sensor emits ultrasonic waves in a cone-shaped pattern. When the ultrasonic waves encounter a reflective target, some energy is reflected to the sensor and subsequently detected. Ultrasonic sensors, in particular, receive reflected energy over a wide range of incidence angles between the sensor and the target. An ultrasonic sensor typically has a detection window such that targets less than a minimum distance away are not detected and returns from targets farther than a maximum distance are ignored. Some parameters that characterize an ultrasonic sensor include its range, its operating frequency, and its beam angle. In response to the detection of a target within the sensing area, the sensor will output a signal, typically an electrical pulse that is received, and processed, by other circuitry that responds appropriately to the pulse.

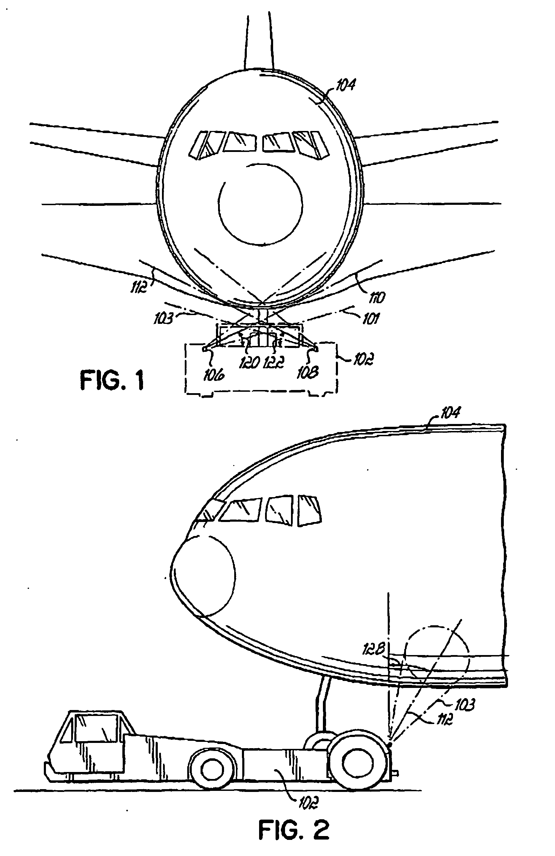

Fig. 1 illustrates a front view of a towbarless tractor 102 engaged with an aircraft 104 in a straight-ahead towing position. The towbarless tractor 102 is depicted transparently, so as not to obscure the location and view of the ultrasonic sensors 106, 108. These sensors are located substantially near the rear of the tractor 102 and on each side of the tractor 102. Looking from the front of the tractor 102 (and the aircraft 104), the ultrasonic sensor 106 is on the left side of the tractor 102 and the other sensor 108 is on the right side of the tractor 102.

As shown, the sensors 106, 108 are located nearly at the edge of their respective sides of the tractor 102. Additionally, the sensors 106, 108 are located to the rear of the tractor 102 so that they are behind the front landing gear of the aircraft 104 when the tractor 102 has engaged the aircraft.

Each ultrasonic sensor emits a conical, or substantially conical, area of ultrasonic waves. The cone 101 from the sensor 106 has a major axis 110 and the cone 103 from the sensor 108 has a major axis 112. The angle 120, 122 each major axis 110, 112 forms with a horizontal plane are selected so that the aircraft 104 intersects both cones 101, 103 of ultrasonic waves when the aircraft 104 is turned-out less than its over-steer angle. From the perspective view of Fig. 2, the major axes 110, 112 also form an angle 128 with a vertical plane, as well.

As shown in Figs. 1 and 2, the orientation of the cones 101, 103 of ultrasonic waves are symmetrically arranged on the tractor 102. In other words, each sensor 106, 108 is located the same distance from the front of the tractor 102; each sensor 106, 108 is located the same distance from the center of the tractor 104; the angle 120 and 122 are the same; and each cone 101, 103 forms the same angle 128. These angles 120, 122, and 128 are selected so that the aircraft 104 intersects both cones 101, 103 when the tractor 102 and aircraft 104 form a steering angle between 0 degrees and a predetermined maximum angle, such as one that is less than an over-steer angle.

The angles 120, 122 and 128 depend on a number of factors such as, for example, the range of sensors 106, 108; the height of the aircraft fuselage 104 above the tractor 102; the beam angle of the sensors 106, 108; and the selected range of steering angles within which the aircraft 104 should intersect the cones 101, 103.

The maximum steering angle, or over-steer condition, varies for different type of aircraft but typically ranges from between approximately 55° - 90° for most commercial passenger jets. Because the tractor 102 can be utilized with a variety of different aircraft, the sensors 106, 108 should be selected and positioned for responding to a wide range of conditions. For example, 45° can be selected as the maximum steering angle in which the aircraft 104 will intersect both cones 101, 103. If that angle is exceeded, the aircraft will not be detected by one of the sensors 106, 108.

With this maximum angle selected, and prior knowledge that for most passenger jets, the aircraft 104 is about 0.25-4 meters above the tractor 102, the sensors 106, 108 and their orientation can be identified. While many ultrasonic sensors are manufactured that have a range of around 0.25-4 meters and a beam angle between 5-20 °, one exemplary ultrasonic sensor useful in this application is manufactured by Pepprl+Fuchs® as model UB4000-30GM- E4-V15. This model has a beam angle of around 10° and operates at a frequency of approximately 85kHz With these operational attributes, the angles 120, 122 are selected to be substantially 27.5° and the angle 128 is substantially 15°. These specific values are given by way of example only. One of ordinary skill would recognize that a different maximum steering angle or a different ultrasonic sensor could be used by adjusting the angles 120, 122 and 128. Additionally, the sensors 106, 108 do not necessarily have to be arranged symmetrically as depicted in these figures. Various arrangements can be designed as long as their detection areas are aligned to provide the appropriate over-steer warning.

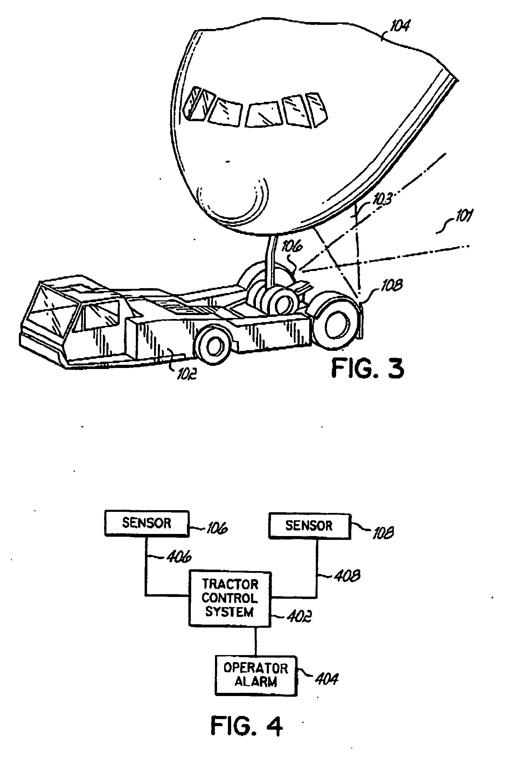

When an operator tows, or pushes, the aircraft 104 with the tractor 102, the steering angle may increase. As the steering angle increases, the fuselage of the aircraft 104 will drift right or left of the back or the tractor 102. If the aircraft 104 drifts enough, then it will no longer be within the sensing area of one of the cones 101, 103. Fig. 3 illustrates when the aircraft is being steered at an angle that causes it to exit the sensing cone 101. As viewed in Fig. 3 from the front of the tractor 102, a significant portion of the fuselage of the aircraft 104 is to the left of the tractor 102; a condition for which corrective action may be warranted. When the sensor 106 determines that the aircraft 104 is no longer detected within its sensing area 101, the sensor 106 can activate an alarm signal to alert the operator. In response the operator can reduce the steering angle to a safe range, or more carefully monitor the situation with the awareness that the over-steer angle is imminently approaching.

Fig. 4 illustrates a schematic view of relevant portions of the tractor 102. In actuality, the tractor 102 is a complex system of circuits and assemblies that allow an operator to easily move large aircraft. However, as implementation of this conventional functionality is well understood by one of ordinary skill, those details are omitted from Fig. 4 so as not to obscure the principles of the present invention.

In general, the tractor 102 includes a control system 402 that is typically a microprocessor-based, or micro controller-based, control system. This system 402, monitors operation of the various parts of the tractor and provides an interface for the operator by which the tractor 102 can be controlled. As explained earlier, ultrasonic sensors 106, 108 are physically located on the tractor 102. In addition to this mechanical connection with the tractor 102, the sensors 106, 108 also communicate with the control system 402 over channels 406, 408. These channels can be wireless, or wired; additionally, they can be redundant or have other safety features to identify if communications are lost or other errors or signal degradation exist in the circuitry.

The sensors 106, 108 are connected with the tractor control systems 402 so that they can be selectively operated during towing operations of the tractor 102. As such, the sensors can be disabled when the tractor 102 is not pushing or towing an aircraft. Additionally, when activated, the sensors 106, 108 communicate to the control system 402 whether the presence of the aircraft 104 is being detected within their respective sensing areas 101, 103. As would be appreciated by a skilled artisan, interrupt-driven as well as polling-based interface methods can be used when the sensors 106, 108 communicate with the control system 402.

When the control system 402, determines that one of the sensors 106, 108 does not detect the aircraft 102, then the control system 402 can activate an alarm 404. The alarm will typically be located within the cab of the tractor 102 but can be placed in any location where it is noticeable by the operator, Furthermore, the alarm 404, can be audible, visual, or both and can vary in tone or frequency based on whether the steering condition persists or worsens. It is anticipated that once becoming aware of the alarm 404, the operator will steer the aircraft 104 such that both sensors 106, 108 once again detect the aircraft 102. Once this happens, the control system 402 can deactivate the alarm 404.

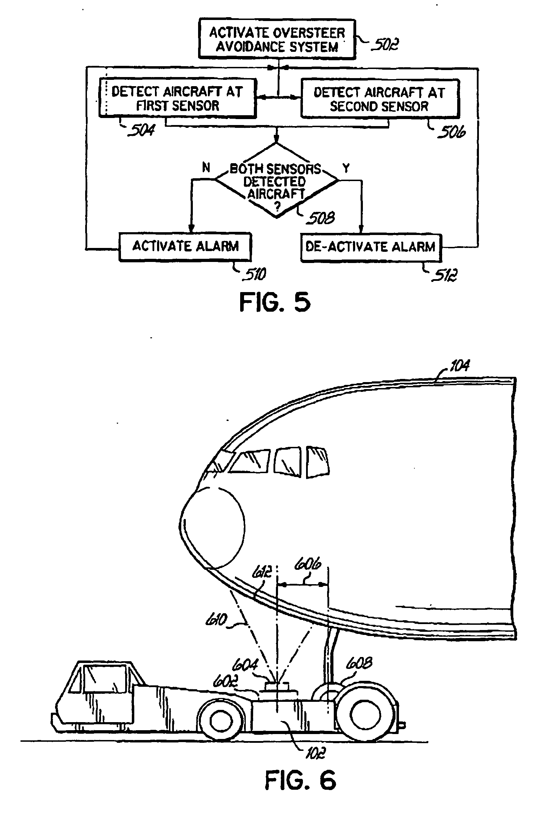

Referring now to Fig. 5, this figure depicts a flowchart of one exemplary algorithm that the tractor control system 402 can implement to avoid over-steer conditions. According to this flowchart, the over-steer avoidance system is activated in step 502. Once this occurs, the sensors 106, 108 are active and emit sensing cones 101, 103, respectively. Next, in step 504, one of the sensors 106, 108 determines whether or not it detects the presence of the aircraft 104 in its sensing area. Concurrently, in step 506, the other of the sensors 106, 108 similarly determines if it detects the presence of the aircraft 104 in its sensing area. Both of these monitoring determinations are then used, in step 508, to determine if one of the sensors 106, 108 failed to detect the presence of the aircraft 104. If both sensors 106, 108 detected the aircraft 104, then the alarm can be de-activated (or remain un-activated), in step 512, and monitoring can continue with steps 504 and 506. However, if one of the sensors 106, 108 failed to detect the aircraft 104, then the alarm is activated (or continues to be activated), in step 510, and monitoring continues with step 504 and 506. In response to the state of the alarm 404, the operator can adjust the towing (or pushing) operation of the aircraft 104.

Although the present invention has been described and illustrated in detail, it is clearly understood that the same is by way of illustration and example only and is not to be taken by way of limitation, the spirit and scope of the present invention being limited by the terms of the appended claims and their equivalents. For example, the ultrasonic sensor arrangement described herein can be retro-fitted to an existing tractor in addition to being originally installed equipment. Additionally, detectors and sensors other than ultrasonic sensors can be utilized as well. These other types of sensors can include uncollimated light transmitters and receivers as well as sound-wave transmitters and receivers operating at lower frequencies. By using uncollimated sources of electromagnetic energy, the reflection of energy back to the receiver on the tractor can occur for a wide variety of aircraft fuselage shapes, fuselage materials, energy incidence angles, and aircraft steering angles.

FIG. 6 illustrates one alternative embodiment in which a single ultrasonic, or other uncollimated energy, sensor is used to provide a warning of an over steering condition. In general, in the two-sensor embodiment described earlier, each sensor focuses energy on a respective section of the fuselage that moves in relation to the tractor 102 based on the steering angle. This area of the fuselage is selected so that it is within a sensor's detection region when the over steering angle is below a threshold and is outside of the sensor's detection region when the over steering angle exceeds a threshold. A similar area of the fuselage may be selected and used in conjunction with a single sensor as well. While the specific placement of the single sensor depends on a number of factors, such as, for example, the height of the fuselage and the beam angle of the sensor, the sensor is placed so that it detects a region of the fuselage whose movement is indicative of the steering angle.

In FIG. 6, a sensor 604 is placed on a platform 602 of the tractor 102. The sensor 604 is placed along the centerline of the tractor 102 so that it aligns with the nose landing gear 608 of the aircraft 104. As shown in FIG. 6, the sensor 604 is located a particular distance 606 in front of the nose landing gear 608. The platform 602 advantageously allows the sensor to be moved in a horizontal plane. As the tractor 102 ages while in use, the alignment of the tires and other components may change so that the sensor 604 is no longer aligned with the landing gear 608 and at the desired distance 606. Accordingly, the platform 602 permits adjustment of the location of the sensor 604 using any of a variety of methods known to one of ordinary skill in the art.

Other, alternative embodiments, contemplate the platform 602 being adjustable in the vertical plane as well so as to effect a change in the height of the sensor 604. Also, to accommodate aircraft of different sizes, the platform 602 may allow an operator of the tractor to adjust the position of the sensor 604 in order to selectively change the distance 606 of the sensor 604 from the nose landing gear 608.

In accordance with one embodiment of the present invention, the sensor 604 is an ultrasonic sensor having a beam angle of approximately 40° to 55° and located ahead of the nose landing gear 608 by a distance 606 of approximately six to eight feet. With such a placement of the sensor 604, it will be located about 12 to 18 feet below the nose region of a typical commercial- sized jet aircraft, The sensor 604 is advantageously oriented so that its cone of energy 610 is directed substantially straight-upwards in the vertical direction.

When the steering angle between the aircraft 104 and the tractor 102 is below a maximum steering angle (e.g., 45°, or 50°), then some portion 612 of the fuselage is located above the sensor 604 within its detection region. However, when the maximum steering angle is exceeded, the entire portion 612 of the fuselage moves so that it no longer "covers" the sensor 604 and thus, the sensor 604 no longer detects the aircraft 104. When the sensor 604 no longer detects the aircraft 104, then the operator of the tractor 102 is warned of the possible over steering condition.

In addition to the above specific embodiment, the present invention contemplates within its scope using a single sensor arrangement to provide over steering warnings for a number of different aircrafts. Thus, in each such case, the fuselage size, shape and height as well as the particular over steering angle for that aircraft, would be considered when selecting the sensor's beam angle and location on the tractor. These considerations would be used to determine the sensor's location so that it will detect a region of the aircraft's nose when the steering angle is within a permitted range and not detect that region when a maximum steering angle is exceeded.

In another embodiment, the sensor 604 and the two sensors 106 and 108 may be utilized in conjunction with one another to provide a total of three different sensors that may trigger the over steering alarm condition. Thus, embodiments of the present invention contemplate using one, two, and even more than two sensors to detect the presence or absence of the fuselage from appropriate detections regions so as to provide an alarm indicative of an over-steering condition.

## Claims

1. A method for avoiding over steering of an aircraft when moving an aircraft (104) with a tractor(102), comprising the steps of:
transmitting a first uncollimated signal forming a first conical coverage area (101) from a first side of the tractor towards a first side of the aircraft's fuselage;
transmitting a second uncollimated signal forming a second conical coverage area (103) from a second side of the tractor towards a second side of the aircraft's fuselage, the first and the second coverage areas criss-crossing one another underneath the aircraft's fuselage;
detecting a first reflection, if present, of the first signal;
detecting a second reflection, if present, of the second signal; and
indicating an over-steering condition if either one of the first reflection or second reflection is absent.

2. The method of claim 1 wherein said first and second uncollimated signals are ultrasonic signals.

3. The method according to any preceding claim, wherein:
the over-steering condition comprises approaching a maximum over-steer angle.

4. The method according to claim 1, wherein:
the step of transmitting the first uncollimated signal includes
transmitting a first ultrasonic signal; and
the step of transmitting the second uncollimated signal includes transmitting a second ultrasonic signal.

5. The method according to any preceding claim, wherein moving the aircraft (104) comprises one of towing and pushing.

6. The method according to any preceding claim, wherein the aircraft tractor (102) comprises one of a towbar tractor and a towbarless tractor.

7. The method according to any preceding claim, wherein the approaching over-steering condition indicates a steering angle of the aircraft is between approximately 40° and approximately 60° and is preferably 45°.

8. The method according to any preceding claim further comprising the steps of:
positioning a first sensor (106) for transmitting the first uncollimated signal and detecting the first reflection, if present, on a tractor (102) so that the first coverage area 101 intersects with a first side of the aircraft (104) when the steering angle is less than a threshold value;
positioning a second sensor (108) for transmitting the second uncollimated signal and detecting the second reflection, if present on the tractor (102) so that the second coverage area (103) intersects with a second side of the aircraft (104) when the steering angle is less than the threshold value;
connecting the first and second sensors (106, 108) to a control system (402) of the tractor(102), the control system (402) adapted to determine if either sensor (106, 108) indicates an absence of the aircraft (104) from their respective coverage area (101, 103); and
operatively coupling an alarm (404) to the control system (402) that activates when either sensor(106, 108) indicates the absence of the aircraft (104) from their respective coverage area (101, 103).

9. The method of claim 8 wherein said sensors (106, 108) are ultrasonic sensors.

10. The method according to claim 8 or claim 9, wherein the threshold value is less than an over-steer angle of the aircraft (104).

11. The method according to any of claims 8-10, wherein the threshold value is substantially 45°.

12. An aircraft tractor (102) adapted to move an aircraft (104) by engaging a nose landing gear (608) of the aircraft (104) thereby creating a steering angle defined between the nose landing gear (608) and a longitudinal axis of the aircraft, the tractor (102) comprising:
a first sensor (106, 604) configured to transmit a first uncollimated signal wave forming a first conical coverage area (101, 610), detect a portion of an aircraft (104) when the
steering angle is less than a predetermined value and provide a signal (406) indicative thereof;
a control system (402) configured to receive the signal (406); and
an alarm coupled (404) with the control system (402) and configured to activate unless the signal (406) indicates the presence of the portion of the aircraft.

13. The tractor (102) of claim 12, wherein the first sensor comprises an ultrasonic sensor.

14. The tractor of claim 13, wherein the ultrasonic sensor includes a beam angle greater than approximately 50 degrees.

15. The tractor (102) of claim 12, wherein the first sensor (604) is positioned on the tractor such as to be located substantially between 6 and 8 feet [1.83 and 2.44m] from a vertical axis of nose landing gear (608) of the aircraft (104) when the tractor engages the nose landing gear of the aircraft and wherein the first sensor (604) is preferably located along a center-line of the tractor (102).

16. The tractor (102) according to claim 12 further comprising:
a second sensor (108) configured to transmit a second uncollimated signal wave forming a second conical coverage area (103), detect a second portion of the aircraft (104) when the steering angle is less that the predetermined value and provide a second signal (408) indicative thereof, the first and second conical coverage areas (101, 103) criss-crossing beneath the aircraft (104);
a control system (402) configured to receive respective first and second signals (406, 408) from the first and second sensors (106, 108) indicative of detecting the respective first and second portions of the aircraft (104); and
an alarm (404) coupled with the control system (402) and configured to activate unless both the first and second signals (406, 408) indicate that the first and second sensors (106, 108) respectively detect the presence of the first and second portions of the aircraft (104).

17. The tractor of claim 16 wherein said first and second sensors (106, 108) are ultrasonic sensors.

18. The tractor of claim 16 wherein said first and second sensors (106, 108) are a first uncollimated-energy transmitter and receiver and a second uncollimated-energy transmitter and receiver.

19. The tractor (102) according to claim 18, wherein:
the first uncollimated-energy transmitter and receiver comprises a first ultrasonic sensor; and
the second uncollimated-energy transmitter and receiver comprises a second ultrasonic sensor.

20. The tractor (102) according to any of claims 16-19, wherein the predetermined value is less than an over-steer angle of the aircraft and is preferably 45°.

21. The tractor (102) according to any of claims 16-20, wherein the tractor (102) comprises a towbar tractor or a towbarless tractor.

22. The tractor(102) according to any of claims 16-21, wherein the first and second sensors (106,108) are locatable behind a nose landing gear (608) of the aircraft (104) when the tractor (102) engages the aircraft (104).

23. The tractor(102) according to any of claims 16-22, wherein:
the first coverage area (101) includes a major axis (110) that angles, from vertical, towards a rear of the aircraft (104) by approximately 15°; and
the second coverage area (103) includes a major axis (112) that angles, from vertical, towards the rear of the aircraft (104) by approximately 15°.

24. The tractor (102) according to any of claims 16-23, wherein:
the first coverage area (101) includes a major axis (110) that angles upward, from horizontal, by approximately 27°; and
the second coverage area (103) includes a major axis(112) that angles upward, from horizontal, by approximately 27°.

## Patentansprüche

1. Verfahren zum Vermeiden einer Lenkwinkelüberschreitung eines Flugzeugs beim Bewegen eines Flugzeugs (104) mit einem Traktor (102), mit den Schritten:
Aussenden eines ersten unkollimierten Signals, das einen ersten Winkelabdeckungsbereich (101) von einer ersten Seite des Traktors zu einer ersten Seite des Flugzeugrumpfs bildet;
Aussenden eines zweiten unkollimierten Signals, das einen zweiten Winkelabdeckungsbereich (103) von einer zweiten Seite des Traktors zu einer zweiten Seite des Flugzeugrumpfes bildet, wobei sich die ersten und zweiten Abdekkungsbereiche unter dem Flugzeugrumpf überkreuzen;
Detektieren einer ersten Reflexion, wenn vorhanden, des ersten Signals;
Detektieren einer zweiten Reflexion, wenn vorhanden, des zweiten Signals; und
Anzeigen einer Lenkwinkelüberschreitungsbedingung, wenn eine von der ersten Reflexion oder der zweiten Reflexion nicht vorhanden ist.

2. Verfahren nach Anspruch 1, wobei die ersten und zweiten unkollimierten Signale Ultraschallsignale sind.

3. Verfahren nach einem der vorhergehenden Ansprüche, wobei:
Die Lenkwinkelüberschreitungsbedingung die Annäherung an einen Maximallenkwinkel umfasst.

4. Verfahren nach Anspruch 1, wobei:
Der Schritt des Aussendens des ersten unkollimierten Signals das Aussenden eines ersten Ultraschallsignals umfasst; und
der Schritt des Aussendens des zweiten unkollimierten Signals das Aussenden eines zweiten Ultraschallsignals umfasst.

5. Verfahren nach einem der vorhergehenden Ansprüche, wobei das Bewegen des Flugzeugs (104) eines von Ziehen und Schieben umfasst.

6. Verfahren nach einem der vorhergehenden Ansprüche, wobei der Flugzeugtraktor (102) einen von einem Zugstangentraktor und einem zugstangenlosen Traktor aufweist.

7. Verfahren nach einem der vorhergehenden Ansprüche, wobei die Annäherung an die Lenkwinkelüberschreitungsbedingung anzeigt, dasss ein Steuerwinkel des Flugzeugs zwischen etwa 40° und etwa 60° liegt und vorzugsweise 45° ist.

8. Verfahren nach einem der vorhergehenden Ansprüche, bei dem:
Ein erster Sensor (106) zum Aussenden des ersten unkollimierten Signals und zum Detektieren der ersten Reflexion, wenn vorhanden, an einem Traktor (102) so positioniert wird, dass der erste Abdeckungsbereich (101) sich mit einer ersten Seite des Flugzeugs (104) überschneidet, wenn der Lenkwinkel kleiner als ein Schwellenwert ist;
ein zweiter Sensor (108) zum Aussenden des zweiten unkollimierten Signals und zum Detektieren der zweiten Reflexion, wenn vorhanden, an dem Traktor (102) so positioniert wird, dass sich der zweite Abdeckungsbereich (103) mit einer zweiten Seite des Flugzeugs (104) überschneidet, wenn der Lenkwinkel kleiner als der Schwellenwert ist;
der erste und zweite Sensor (106, 108) mit einem Steuersystem (402) des, Traktors (102) verbunden werden, wobei das Steuersystem (402) dazu angepasst ist, um festzustellen, ob einer der Sensoren (106, 108) das Nichtvorhandensein des Flugzeugs (104) in ihrem jeweiligen Abdeckungsbereich (101, 103) anzeigt; und
ein Alarmgeber (404) mit dem Steuersystem (402) operativ verbunden wird, der aktiviert wird, wenn irgendeiner der Sensoren (106, 108) das Nichtvorhandensein des Flugzeugs (104) in dem jeweiligen Abdeckungsbereich (101, 103) anzeigt.

9. Verfahren nach Anspruch 8, wobei die Sensoren (106, 108) Ultraschallsensoren sind.

10. Verfahren nach Anspruch 8 oder 9, wobei der Schwellenwert kleiner als ein Maximallenkwinkel des Flugzeugs (104) ist.

11. Verfahren nach einem der Ansprüche 8 bis 10, wobei der Schwellenwert im Wesentlichen 45° ist.

12. Flugzeugtraktor (102), der dazu ausgestaltet ist, um ein Flugzeug (104) durch Eingriff mit einem Bugfahrwerk (608) des Flugzeugs 104 zu bewegen, wodurch ein Lenkwinkel erzeugt wird, der zwischen dem Bugfahrwerk (608) und der Längsachse des Flugzeugs definiert ist, wobei der Traktor (102) aufweist:
Einen ersten Sensor (106, 604), der dazu aufgebaut ist, eine erste unkollimierte Signalwelle auszusenden, die einen ersten kegelförmigen Abdeckungsbereich (101, 610) bildet, einen Bereich eines Flugzeugs (104) zu detektieren, wenn der Lenkwinkel kleiner als ein vorgegebener Wert ist, und ein dieses anzeigendes Signal (406) zu liefern;
ein Steuersystem (402), das dazu aufgebaut ist, das Signal (406) zu empfangen; und
einen Alarmgeber (404), der mit dem Steuersystem (402) gekoppelt ist und dazu ausgestaltet ist, aktiv zu werden, falls das Signal (406) nicht das Vorhandensein des Bereichs des Flugzeugs anzeigt.

13. Traktor (102) nach Anspruch 12, wobei der erste Sensor einen Ultraschallsensor aufweist.

14. Traktor nach Anspruch 13, wobei der Ultraschallsensor einen Strahlwinkel von mehr als etwa 50° aufweist.

15. Traktor (102) nach Anspruch 12, wobei der erste Sensor (604) so an dem Traktor positioniert ist, dass er im Wesentlichen zwischen 6 und 8 Fuß (1,83 und 2,44 m) entfernt von einer vertikalen Achse des Bugfahrwerks (608) des Flugzeugs (104) liegt, und wobei der erste Sensor (604), wenn der Traktor an dem Bugfahrwerk des Flugzeugs angreift, vorzugsweise entlang der Mittellinie des Traktors (102) angeordnet ist.

16. Traktor (102) nach Anspruch 12, der weiter aufweist:
Einen zweiten Sensor (108), der dazu aufgebaut ist, um eine zweite unkollimierte Signalwelle auszusenden, die einen zweiten kegelförmigen Abdeckungsbereich (103) bildet, einen zweiten Bereich des Flugzeugs (104) zu detektieren, wenn der Lenkwinkel kleiner als der vorgegebene Wert ist, und ein dieses anzeigendes zweites Signal (408) zu liefern, wobei sich die ersten und zweiten kegelförmigen Abdeckungsbereiche (101, 103) unter dem Flugzeug (104) überkreuzen;
ein Steuersystem (102), das dazu aufgebaut ist, die ersten und zweiten Signale (406, 408) von dem ersten und zweiten Sensor (106, 108), die die Detektion des jeweiligen ersten und zweiten Bereichs des Flugzeugs (104) anzeigen, zu empfangen; und
einen Alarmgeber (404), der mit dem Steuersystem (402) verbunden ist und der dazu aufgebaut ist, aktiv zu werden, wenn nicht sowohl das erste und das zweite Signal (406, 408) anzeigen, das die ersten und zweiten Sensoren (106, 108) das Vorhandensein der ersten und zweiten Bereiche des Flugzeugs (104) detektieren.

17. Traktor nach Anspruch 16, wobei die ersten und zweiten Sensoren (106, 108) Ultraschallsensoren sind.

18. Traktor nach Anspruch 16, wobei die ersten und zweiten Sensoren (106, 108) ein erster Sender und Empfänger von unkollimierter Energie und ein zweiter Sender und Empfänger von unkollimierter Energie sind.

19. Traktor (102) nach Anspruch 18, wobei:
Der erste Sender und Empfänger für unkollimierte Energie einen ersten Ultraschallsensor aufweist; und
der zweite Sender und Empfänger für unkollimierte Energie einen zweiten Ultraschallsensor aufweist.

20. Traktor (102) nach einem der Ansprüche 16 bis 19, wobei der vorgegebene Wert kleiner als ein Maximallenkwinkel des Flugzeugs ist und vorzugsweise 45° ist.

21. Traktor (102) nach einem der Ansprüche 16 bis 20, wobei der Traktor (102) ein Zugstangentraktor oder ein zugstangenloser Traktor ist.

22. Traktor (102) nach einem der Ansprüche 16 bis 21, wobei die ersten und zweiten Sensoren (106, 108) hinter einem Bugfahrwerk (608) des Flugzeugs (104) positionierbar sind, wenn der Traktor (102) in Eingriff mit dem Flugzeug (104) ist.

23. Traktor (102) nach einem der Ansprüche 16 bis 22, wobei:
Der erste Abdeckungsbereich (101) eine Hauptachse (110) beinhaltet, die gegenüber der Vertikalen zum hinteren Ende des Flugzeugs (104) um etwa 15° abgewinkelt ist, und
der zweite Abdeckungsbereich (103) eine Hauptachse (112) beinhaltet, die gegenüber der Vertikalen zum hinteren Ende des Flugzeuges um etwa 15° abgewinkelt ist.

24. Traktor (102) nach einem der Ansprüch 16 bis 23 wobei:
Der erste Abdeckungsbereich (101) eine Hauptachse (110) beinhaltet, die, gegenüber der Horizontalen, um einen Winkel von etwa 27° nach oben abgewinkelt ist; und
der zweite Abdeckungsbereich (103) eine Hauptachse (112) beinhaltet, die gegenüber der Horizontalen um etwa 27° nach oben abgewinkelt ist.

## Revendications

1. - Procédé pour éviter le survirage d'un avion lorsque l'on déplace un avion (104) avec un tracteur (102), comprenant les étapes consistant à :
- transmettre un premier signal non collimaté formant une première zone de couverture conique (101) à partir d'un premier côté du tracteur en direction d'un premier côté du fuselage de l'avion;
- transmettre un second signal non collimaté formant une seconde zone de couverture conique (103) à partir d'un second côté du tracteur en direction d'un second côté du fuselage de l'avion, les première et seconde zones de couverture s'entre-croisant l'une l'autre au-dessous du fuselage de l'avion ;
- détecter une première réflexion, si elle est présente, du premier signal ;
- détecter une seconde réflexion, si elle est présente, du second signal ; et
- indiquer une condition de survirage si l'une ou l'autre de la première réflexion ou de la seconde réflexion est absente.

2. - Procédé selon la revendication 1, dans lequel lesdits premier et second signaux non collimatés sont des signaux ultrasoniques.

3. - Procédé selon l'une quelconque des revendications précédentes, dans lequel:
- la condition de survirage comprend l'approche d'un angle de survirage maximal.

4. - Procédé selon la revendication 1, dans lequel :
- l'étape de transmission du premier signal non collimaté comprend la transmission d'un premier signal ultrasonique ; et
- l'étape de transmission du second signal non collimaté comprend la transmission d'un second signal ultrasonique.

5. - Procédé selon l'une quelconque des revendications précédentes, dans lequel le déplacement de l'avion (104) comprend l'un parmi le remorquage et la poussée.

6. - Procédé selon l'une quelconque des revendications précédentes, dans lequel le tracteur d'avion (102) comprend l'un parmi un tracteur à barre de remorquage et un tracteur sans barre de remorquage.

7. - Procédé selon l'une quelconque des revendications précédentes, dans lequel la condition d'approche du survirage indique qu'un angle de braquage de l'avion est entre approximativement 40° et approximativement 60° et est, de préférence, de 45°.

8. - Procédé selon l'une quelconque des revendications précédentes, comprenant en outre les étapes consistant à :
- positionner un premier détecteur (106) pour transmettre le premier signal non collimaté et détecter la première réflexion, si elle est présente, sur un tracteur (102) de telle sorte que la première zone de couverture (101) coupe un premier côté de l'avion (104) lorsque l'angle de braquage est inférieur à une valeur de seuil ;
- positionner un second détecteur (108) pour transmettre le second signal non collimaté et détecter la seconde réflexion, si elle est présente, sur le tracteur (102) de telle sorte que la seconde zone de couverture (103) coupe un second côté de l'avion (104) lorsque l'angle de braquage est inférieur à la valeur de seuil ;
- connecter les premier et second détecteurs (106, 108) à un système de commande (402) du tracteur (102), le système de commande (402) étant adapté pour déterminer si l'un ou l'autre détecteur (106, 108) indique une absence de l'avion (104) de leur zone de couverture respective (101, 103) ; et
- coupler de façon fonctionnelle une alarme (404) au système de commande (402) qui s'active lorsque l'un ou l'autre détecteur (106, 108) indique l'absence de l'avion (104) de leur zone de couverture respective (101, 103).

9. - Procédé selon la revendication 8, dans lequel lesdits détecteurs (106, 108) sont des détecteurs à ultrasons.

10. - Procédé selon la revendication 8 ou la revendication 9, dans lequel la valeur de seuil est inférieure à un angle de survirage de l'avion (104).

11. - Procédé selon l'une quelconque des revendications 8 à 10, dans lequel la valeur de seuil est sensiblement de 45°.

12. - Tracteur d'avion (102) adapté pour déplacer un avion (104) par engagement d'un train d'atterrissage avant (608) de l'avion (104), créant ainsi un angle de braquage défini entre le train d'atterrissage avant (608) et un axe longitudinal de l'avion, le tracteur (102) comprenant:
- un premier détecteur (106, 604) configuré pour transmettre une première onde de signal non collimatée formant une première zone de couverture conique (101, 610), détecter une partie d'un avion (104) lorsque l'angle de braquage est inférieur à une valeur prédéterminée et fournir un signal (406) indicatif de celui-ci ;
- un système de commande (402) configuré pour recevoir le signal (406) ; et
- une alarme (404) couplée au système de commande (402) et configurée pour s'activer à moins que le signal (406) n'indique la présence de la partie de l'avion.

13. - Tracteur (102) selon la revendication 12, dans lequel le premier détecteur comprend un détecteur à ultrasons.

14. - Tracteur selon la revendication 13, dans lequel le détecteur à ultrasons comprend un angle de faisceau supérieur à approximativement 50 degrés.

15. - Tracteur (102) selon la revendication 12, dans lequel le premier détecteur (604) est positionné sur la tracteur de façon à être situé sensiblement entre 6 et 8 pieds [1,83 et 2,44 m] d'un axe vertical du train d'atterrissage avant (608) de l'avion (104) lorsque le tracteur engage le train d'atterrissage avant de l'avion, et dans lequel le premier détecteur (604) est situé, de préférence, le long d'une ligne médiane du tracteur (102).

16. - Tracteur (102) selon la revendication 12, comprenant en outre :
- un second détecteur (108) configuré pour transmettre une seconde onde de signal non collimatée formant une seconde zone de couverture conique (103), détecter une seconde partie de l'avion (104) lorsque l'angle de braquage est inférieur à la valeur prédéterminée et fournir un second signal (408) indicatif de celui-ci, les première et seconde zones de couverture coniques (101, 103) s'entrecroisant au-dessous de l'avion (104) ;
- un système de commande (402) configuré pour recevoir des premier et second signaux respectifs (406, 408) à partir des premier et second détecteurs (106, 108) indicatifs de la détection des première et seconde parties respectives de l'avion (104) ; et
- une alarme (404) couplée au système de commande (402) et configurée pour s'activer à moins qu'à la fois les premier et second signaux (406, 408) n'indiquent que les premier et second détecteurs (106, 108) détectent respectivement la présence des première et seconde parties de l'avion (104).

17. - Tracteur selon la revendication 16, dans lequel lesdits premier et second détecteurs (106, 108) sont des détecteurs à ultrasons.

18. - Tracteur selon la revendication 16, dans lequel lesdits premier et second détecteurs (106, 108) sont un premier émetteur-récepteur d'énergie non collimatée et un second émetteur-récepteur d'énergie non collimatée.

19. - Tracteur (102) selon la revendication 18, dans lequel:
- le premier émetteur-récepteur d'énergie non collimatée comprend un premier détecteur à ultrasons ; et
- le second émetteur-récepteur d'énergie non collimatée comprend un second détecteur à ultrasons.

20. - Tracteur (102) selon l'une quelconque des revendications 16 à 19, dans lequel la valeur prédéterminée est inférieure à un angle de survirage de l'avion et est, de préférence, de 45°.

21. - Tracteur (102) selon l'une quelconque des revendications 16 à 20, dans lequel le tracteur (102) comprend un tracteur avec barre de remorquage ou un tracteur sans barre de remorquage.

22. - Tracteur (102) selon l'une quelconque des revendications 16 à 21, dans lequel les premier et second détecteurs (106, 108) sont aptes à être situés derrière un train d'atterrissage avant (608) de l'avion (104) lorsque le tracteur (102) engage l'avion (104).

23. - Tracteur (102) selon l'une quelconque des revendications 16 à 22, dans lequel :
- la première zone de couverture (101) comprend un axe majeur (110) qui forme un angle, à partir de la verticale, vers un arrière de l'avion (104) d'approximativement 15° ; et
- la seconde zone de couverture (103) comprend un axe majeur (112) qui forme un angle, à partir de la verticale, vers l'arrière de l'avion (104) d'approximativement 15°.

24. - Tracteur (102) selon l'une quelconque des revendications 16 à 23, dans lequel :
- la première zone de couverture (101) comprend un axe majeur (110) qui forme un angle vers le haut, à partir de l'horizontale, d'approximativement 27° ; et
- la seconde zone de couverture (103) comprend un axe majeur (112) qui forme un angle vers le haut, à partir de l'horizontale, d'approximativement 27°.
